(19) Europäisches Patentamt / European Patent Office / Office européen des brevets

(11) **EP 2 914 869 B1**

(12) **EUROPEAN PATENT SPECIFICATION**

(45) Date of publication and mention
of the grant of the patent:
**17.08.2016 Bulletin 2016/33**

(21) Application number: **13803247.9**

(22) Date of filing: **05.11.2013**

(51) Int Cl.:
*B61H 5/00* (2006.01)     *F16D 55/224* (2006.01)
*F16D 65/095* (2006.01)

(86) International application number:
**PCT/IB2013/059904**

(87) International publication number:
**WO 2014/068540 (08.05.2014 Gazette 2014/19)**

(54) **MECHANICAL FRICTION DEVICE INCLUDING A POROUS CORE**

MECHANISCHE REIBUNGSVORRICHTUNG MIT EINEM PORÖSEN KERN

DISPOSITIF DE FRICTION MÉCANIQUE COMPRENANT UNE PARTIE CENTRALE POREUSE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.11.2012 ZA 201209788**

(43) Date of publication of application:
**09.09.2015 Bulletin 2015/37**

(73) Proprietor: **University Of The Witwatersrand,
Johannesburg
2050 Johannesburg (ZA)**

(72) Inventors:
• **KIM, Tongbeum**
  **2050 Johannesburg (ZA)**
• **KIENHÖFER, Frank Werner**
  **2050 Johannesburg (ZA)**

(74) Representative: **V.O.
P.O. Box 87930
2508 DH Den Haag (NL)**

(56) References cited:
**DE-A1- 19 819 425     DE-A1-102008 011 842
DE-B- 1 219 345     FR-A1- 2 972 776
US-A- 2 410 195     US-A- 2 697 499**

EP 2 914 869 B1

**Description**

BACKGROUND TO THE INVENTION

This invention relates to a mechanical friction device which includes a porous core. In particular, but not exclusively, the invention relates to a brake or clutch disc which includes a porous layer sandwiched between two outer, friction layers.

The braking system on a vehicle is indispensable. Amongst other brake systems, disc brakes have been employed extensively to dissipate kinetic energy into heat at the contact interface between the brake disc and brake pads. A person familiar with the operation of disc brakes will know that both mechanical and thermal loads are simultaneously applied to the brake disc during braking. A brake disc therefore need not only be able to withstand the compressive forces exerted on it by the brake pads but also need to be able to handle the thermal loads resulting from the frictional forces between the disc and pads.

During braking a continuous clamping force is applied on the brake disc by the brake pads. It has been determined that for a medium-sized goods vehicle, such as a Mercedes-Benz Atego, about 120 kN of clamping force is applied on the brake disc with a contact area of about $19,49 \times 10^{-3}m^2$ (0.2107 m x 0.0925m), which covers about one sixth of the total disc area. Based on the above parameters, an average compressive stress of about 6 MPa is exerted on the brake disc material directly below the brake pad.

It has further been determined that the heat flux imposed on the brake disc of a medium-sized goods vehicle, such as a Mercedes-Benz Atego, due to the frictional heating between the brake disc and pads is in the order of about $0.2 \ MW/m^2$. This value is based on the vehicle descending at a constant 3.5% gradient at a constant speed of 80 km/h.

Numerous studies have shown how high temperatures and their non-uniform distribution on the brake disc may result in brake fade and increased wear of both discs and pads. The induced thermal stress field can lead to low-cycle fatigue of the discs, cracking and even catastrophic failure. If the overall temperature is excessively high, the brake fluid may boil in the calliper cylinders, which could lead to 'fluid fade' and a potentially dangerous reduction in braking effort.

To address these brake failure problems, the brake disc must be capable of handling the high level of heat flux. One method of handling the high heat flux that is currently being used is to remove the heat by means of a heat exchange elements included in the brake disc. A well-known solution is to design the brake disc to include slots or holes in which forced convective air flow is induced as the disc rotates. Another known solution is to include heat exchange elements such as radial vanes, curved vanes and pin-fins in an air flow channel in the body of the disc. This type of disc brake is commonly referred to in the industry as a vented or ventilated disc brake. Cooling flow is drawn into the ventilated channel when the brake disc rotates. One type of ventilated brake disc includes a number of annularly spaced apart channels which each extend in a radial direction. Another type of ventilated brake disc includes a single annular channel located between two outer rubbing discs which, in use, engage the brake pads. A number of heat exchange elements are located in the annular channel and extend between the two outer rubbing discs. For example, the specification of US 2,410,195 discloses a disc brake which has spaced apart radial blades running between two braking rings.

Studies into the velocity field around a ventilated brake disc equipped with purely radial vanes in its ventilated channel have shown that the cooling flow swirls in the counter-rotating direction with respect to the brake disc axis, before entering the ventilated channel. Due to the Coriolis force, the incident flow angle to the vane passage becomes high, causing flow separation from the leading edge of the vanes. Consequently, a large flow recirculation region forms on the suction side of each vane, which reduces the amount of cooling flow in the ventilated channel. To increase cooling flow in the ventilated channel, some improved vane designs have been devised such as curved vanes which suppress flow separation. As a result, the mass flow rate of cooling flow and the corresponding cooling performance are reported to be further improved. However, the highly non-uniform heat transfer caused by the radially distributed vanes also leads to a high temperature gradient in the discs near the vanes. Correspondingly, thermal stress makes such brake discs prone to thermal fatigue related cracking along the vanes, which has restricted their application in heavy duty vehicles. In an attempt to reduce the large temperature gradient within the brake discs, brake discs with pin-fins that are both radially and circumferentially distributed in the ventilated channel were developed. The specification of DE 198 19 425 discloses the use of columns, which act as pin-fins, located in the ventilation channel and running between its outer friction layers.

Although the heat transfer performance of the brake discs with vanes and pin-fins has shown to be improved overall, the design constraints on the brake disc make it difficult to optimize every aspect of their design simultaneously. It is desirable to optimize the weight and stiffness of brake discs as well as their cooling capability. This leads to conflicting design requirements. In an attempt to address this problem it has been suggested to use alternative forms of heat dissipation means such as steel foam. For example, see the specifications of FR 2 972 776 and DE 10 2008 011 842. The use of steel foam however does not provide the required structural strength and integrity.

The design flexibility on the heat exchange elements in the ventilated disc channel is typically limited in view of the fact that the elements must have sufficient structural integrity to withstand the high clamping or compressive force between the brake pads and the brake disc. It is for this reason that the ventilated brake discs used in light and heavy duty vehicles have more than 30% of the ventilated disc channel volume occupied by solid heat exchange elements protruding normal to the brake disc. One problem with this arrangement of heat exchange elements is that no heat spreading along the circumference of the brake disc is present, which induces circumferential thermal stresses.

Thermally, the ventilated brake disc is firstly required to ensure low temperature on the brake disc and pads and secondly to ensure low temperature gradient in the radial and circumferential directions. Furthermore, since the cooling flow which removes heat from the ventilated channel and heat exchange elements in forced convection, is drawn by the centrifugal motion of the brake disc, low pressure drop across the heat exchanger elements is generally desired.

It is an object of this invention to alleviate at least some of the problems experienced with existing mechanical friction devices such as brake or clutch discs.

It is a further object of this invention to provide a mechanical friction device, and in particular a brake or clutch disc, that will be a useful alternative to existing friction devices.

It is yet a further object of this invention to provide a structure for a brake or clutch disc, and other friction devices, which has reduced weight together with the necessary strength, rigidity and improved thermal dissipation properties when compared to known ventilated disc brakes.

### SUMMARY OF THE INVENTION

In accordance with the invention there is provided a mechanical friction device including a central layer which is sandwiched between two outer, friction layers, the central layer having a porosity level higher than that of the two friction layers, the outer layers in the form of discs which define a ventilation channel between them, characterised in that the central layer is in the form of an annular core made from a wire-frame structure located in the ventilation channel to act as heat transfer means to transfer heat away from the friction surfaces of the outer, friction layers.

In one embodiment of the invention the wire-frame structure is a X-type lattice sandwich structure. In another embodiment of the invention the wire-frame structure is a wire-woven bulk diamond structure.

The central layer may have a porosity level of at least about 40%, preferably about 90%.

The central layer is preferably made from steel.

The two outer, friction layers are preferably made from cast iron or steel. The friction device may be a brake or clutch disc.

In accordance with a second aspect of the invention there is provided a use of a wire-frame structure as heat dissipation means located in a ventilation channel between two outer, friction layers of a mechanical friction device so as to transfer hear away from the friction surfaces of the outer friction layers. The mechanical friction device may be a brake or clutch disc for example.

The wire-frame structure may be in the form of an X-type lattice sandwich structure or a wire-woven bulk diamond structure.

The wire-frame structure is preferably sandwiched between two outer, friction layers which have porosity levels lower than that of the wire frame structure.

### BRIEF DESCRIPTION OF THE DRAWINGS

The invention will now be described in more detail, by way of example only, with reference to the accompanying drawings in which:

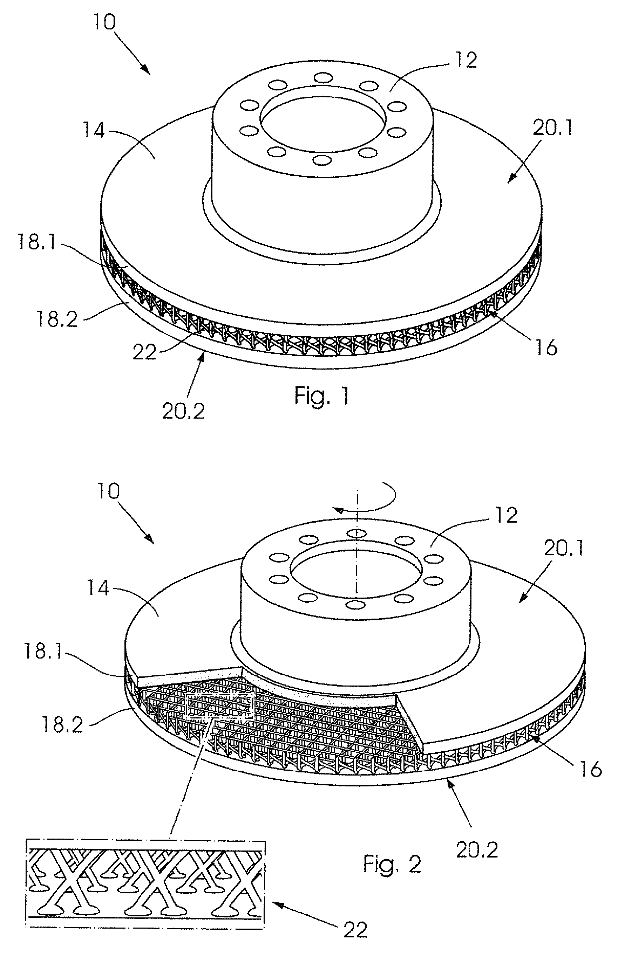

**Figure 1**      shows a perspective view of a mechanical friction device in the form of a brake disc of a disc brake assembly in accordance with the invention;

**Figure 2**      shows a perspective view of the brake disc of Figure 1 in which a section is cut away to show a central layer including a wire-frame structure;

**Figure 3**      shows the arrangement of wires in an X-type lattice sandwich structure which may be used as the wire-frame structure of the brake disc of Figure 1;

**Figure 4**      shows the arrangement of wires in a wire-woven bulk diamond structure which may be used as the wire-frame structure of the brake disc of Figure 1;

**Figure 5**      shows an annular wire-woven bulk diamond structure and its unit cell for use in a brake disc of Figure 1 in experimental testing;

**Figure 6**      shows the wire-woven bulk diamond structure of Figure 5 integrated into a ventilated brake disc;

**Figure 7**      shows the dimensions of a prior art pin-finned brake disc used during experimental testing as reference;

**Figure 8**      shows the inlet flow pattern of the brake disc of Figure 6.

**Figure 9**      shows a transient local surface temperature comparison of cooling performance of the WBD brake disc of Figure 6 compared to that of the pin-finned brake disc of Figure 7;

**Figure 10**     shows a transient mean surface temperature comparison of cooling performance of the WBD brake disc of Figure 6 compared to that of the pin-finned brake disc of Figure 7;

**Figure 11**     shows radial temperature profiles of the WBD brake disc of Figure 6 compared to that of the pin-finned brake disc of Figure 7 extracted from the dashed lines denoted as (II) in Figure 9;

**Figure 12**     shows representative disc surface temperature distribution on the WBD brake disc of Figure 6 compared to that of the pin-finned brake disc of Figure 7, captured by an IR camera at 1000 rpm;

**Figure 13**     shows measured inner endwall temperature maps by the IR camera for stationary cooling at ReDh = 14400 of the pin-finned disc of Figure 7;

**Figure 14**     shows measured inner endwall temperature maps by the IR camera for stationary cooling at ReDh = 14400 of the WBD disc of Figure 6.

**Figure 15**     shows the measured azimuthal temperature profiles of the WBD brake disc of Figure 6 and the pin-finned brake disc of Figure 7 normalized by mean temperature taken along lines III(a) in Figures 13 and 14;

**Figure 16**     shows the measured radial temperature profiles at $\theta = 22.5\underline{o}$ of the WBD brake disc of Figure 6 and the pin-finned brake disc of Figure 7 normalized by mean temperature taken along lines III(b) in Figures 13 and 14;

**Figure 17**     shows the measured exit radial velocity profiles of the WBD brake disc of Figure 6 and the pin-finned brake disc of Figure 7;

**Figure 18**     shows the pressure drop vs. coolant inlet velocity for both the WBD brake disc of Figure 6 and the pin-finned brake disc of Figure 7 when stationary;

**Figure 19**     shows the friction factor vs. Reynolds number for both the WBD brake disc of Figure 6 and the pin-finned brake disc of Figure 7 when stationary;

**Figure 20**     shows the pumping capacities of the both the WBD brake disc of Figure 6 and the pin-finned brake disc of Figure 7 as a function of the brake disc's rotational speed.

## DESCRIPTION OF THE ILLUSTRATED EMBODIMENT

Referring to the drawings, in which like numerals indicate like features, a non-limiting example of a mechanical friction device in accordance with the invention is generally indicated by reference numeral 10.

In the accompanying drawings the mechanical friction device is illustrated as a brake disc of a disc brake assembly. The brake disc 10 includes a hub 12 and a disc 14 which is also sometimes referred to as a rotor. The disc 14 has an annular ventilation channel 16 located between two outer portions 18.1 and 18.2 of the disc. The outer portions 18.1 and 18.2 are also referred to as rubbing discs. In use, the two rubbing discs 18.1 and 18.2 of the disc 14 engage brake pads (not shown in the accompanying drawings) during braking. It must be understood that the disc brake assembly typically includes two brake pads which clamp the disc 14 between then during braking. In other words, the outside surfaces 20.1 and 20.2 of the rubbing discs 18.1 and 18.2 are in contact with the brake pads during braking. Thus, the outside surfaces 20.1 and 20.2 of the rubbing discs 18.1 and 18.2 act as friction surfaces or interface between the brake pads and the brake disc 10. The rubbing discs 18.1 and 18.2 are therefore also referred to as the friction layers.

The average compressive stress in the disc 14 reduces from the disc-pad interfaces towards the axial centre of the disc, i.e. towards the position of the channel 16. This reduction in stress allows for the inclusion of a porous material layer 22 in the centre of the disc 14. In the illustrated embodiment the central material layer 22 is made from a lightweight highly porous cellular structure 22 located in the central channel 16 so that it is sandwiched between the two outer rubbing discs 18.1 and 18.2. The inclusion of a porous material layer 22 sandwiched between two outer, friction layers 18.1, 18.2 not only results in weight saving but also enhances heat dissipation as it acts as heat transfer means during braking. More about this is said below.

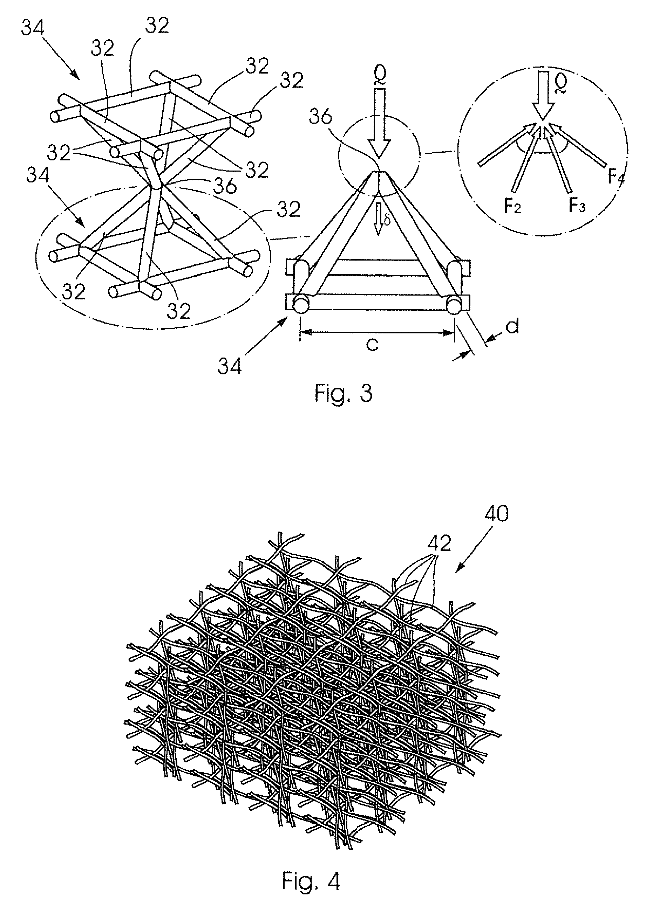

In the preferred embodiment the structure of the porous layer 22 is in the form of a wire-frame structure. The definition of a wire-frame should be interpreted to include any three-dimensional structure constructed from elongate wires which are connected or intersect at common nodes. Two examples of wire-frame structures are indicated in Figures 3 and 4. The wire-frame structure of Figure 3 is referred to as an X-type lattice sandwich structure 30 while the structure of Figure 4 is referred to as a wire-woven bulk diamond (WBD) structure 40. Although various other forms of wire-frame structures could be used, only the X-type lattice sandwich structure 30 and the WBD structure 40 are described in detail in this specification.

Referring to Figure 3, X-type lattice sandwich structure 30 is formed by two groups of staggered struts 32 arranged in the shape of a pyramid 34 and fabricated by folding expanded metal sheet along rows of offset nodes 36 and then brazing the folded structure (as the core) with top and bottom facesheets to form the sandwich structure. It is believed that this structure would be suitable for use in the disc brakes of light duty vehicles.

Referring to Figure 4, WBD structure 40 is fabricated by weaving helically formed metal wires 42. The helical wires 42 are assembled and woven in six directions to form multi-layered wire-woven bulk diamond structures having diamond-like unit cells. Figure 4 illustrates a rendering of the multi-layered wire-woven bulk diamond cellular structure composed of octahedron and cub-octahedron unit cells. Given its relative density, strength and stiffness compared to an X-type lattice sandwich structure 30 it is believed that the WBD structure 40 would be suitable for use in the disc brakes of heavy duty vehicles.

The properties of the WBD structure 40 for three selected slenderness ratios are shown in Table 1 below. The porosity levels of all three examples are above 90%.

Table 1: Material Properties of Wire-Woven Bulk Diamond Structure

| Wire diameter (d, mm) | Wire length (c, mm) | Relative Density $\rho_{rel}$ (%) | Porosity (%) | Slenderness ratio (d/c) | Equivalent Strength $\sigma_{max}$ (MPa) | Young's Modulus $\overline{E}_c$ (GPa) |
|---|---|---|---|---|---|---|
| 0.78 | | 4.6 | 95.4 | 0.096 | 1.59 | 0.574 |
| 0.98 | 8.1 | 6.3 | 93.7 | 0.121 | 3.78 | 1.57 |
| 1.18 | | 8.1 | 91.9 | 0.146 | 5.69 | 1.92 |

Based on the relative density levels of the wire-frame structures described above, which are above 90%, it can be seen that the central layer 22 is highly porous when compared to conventional heat exchange elements of ventilated discs, which typically has maximum relative density levels around 50%. Compression test results using a WBD structure 40 have demonstrated that with very low relative density, the porous cellular structure can sustain the high compressive stress resulting from the clamping force during braking.

In addition to the approximately 30% weight reduction in the material used in the brake disc channel 16 (in the case of a ventilated brake disc for a lightweight vehicle), it has been found that this highly porous central layer 22 acts as an efficient heat exchanger. Experimental results, which are discussed in detail below, indicate that tree-dimensional flow mixing occurred inside the central layer 22 as opposed to largely two-dimensional flow mixing in conventional ventilated brake discs. The advantage of three-dimensional flow mixing is that it will lead to radial and circumferential heat spreading which, in turn, results in minimized radial and circumferential temperature gradients.

Another advantage of using the highly porous central layer 22 is that it enhances overall heat transfer due to increased local thermal dispersion by the thin ligaments of the wire-frame structure. The wire-frame structure also allows more cooling flow, or an increased mass flow rate, to enter the ventilated disc channel 16 due to less overall flow resistance.

Based on the ability of the wire-frame structure to withstand the compressive forces and thermal loads imposed on the brake disc 10 during braking, it is believed that it makes for a good heat transfer means for use in ventilated brake discs. Over and above its structural and thermal characteristics, the wire-frame structure also has the advantage that it is lightweight which results in an overall weight saving when compared to conventional disc brakes.

It is believed that the brake disc 10 including a highly porous layer 22 in accordance with the invention would prolong brake life as a result of the lowered operating temperature and minimized local thermal non-uniformity during braking. Furthermore, it is envisaged that the lighter brake discs will reduce fuel consumption.

## EXPERIMENTAL RESULTS

The advantages of the use of a wire-framed structure in the brake disc 10 in accordance with the invention have been investigated thoroughly in experimental testing. A wire-frame structure in the form of a WBD structure was used in the experiments.

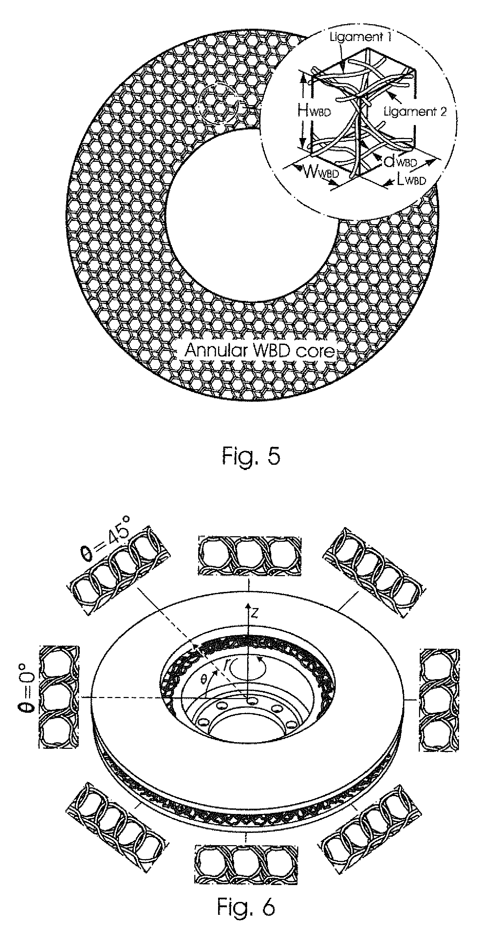

A metallic, in particular mild steel, WBD structure and its integration into a ventilated brake disc are shown in Figures 5 and 6. A single-layered WBD structure is first fabricated using steel wires with diameter, $d_{WBD}$. The wires are formed into a helical shape by twisting four wires together at a pitch, $l_h$. The helical wires are then three-dimensionally assembled to form a specific topology. Afterwards, the assembly is sprayed with copper paste (Cubond™ grade 17LR, from SCM Metal Products, Inc.) and is brazed at 1120 °C in the de-oxidation atmosphere of $H_2$-$N_2$ mixture. As a result of the brazing, the wires or ligaments are connected to each other at their contact points, which may significantly improve the thermo-mechanical performance compared with an un-brazed WBD structure. The single-layered WBD structure is subsequently cut into an annular shape after which it is sandwiched by and brazed onto two mild steel rubbing discs as shown in Figure 6.

### Test samples

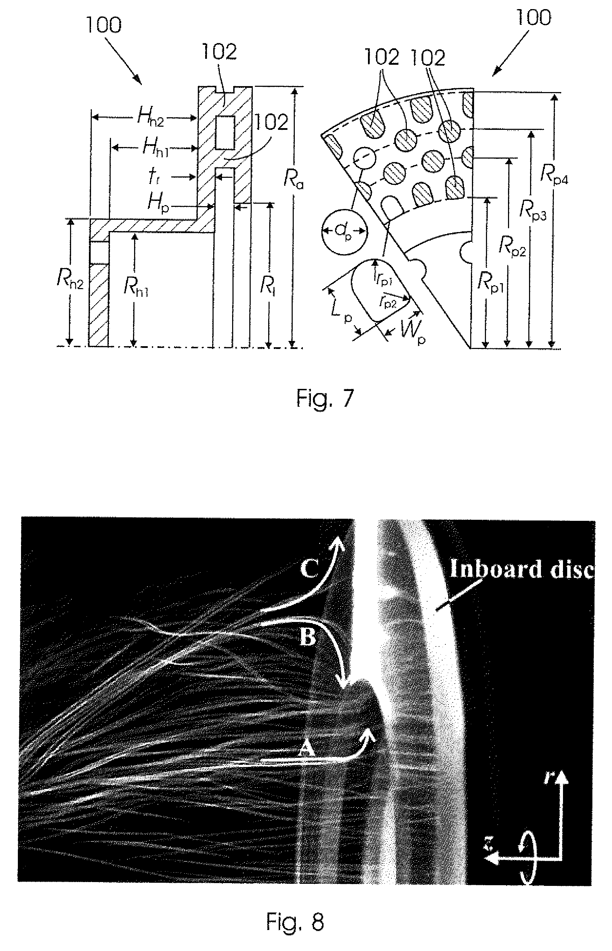

Commercial pin-finned brake discs made of cast iron with a thermal conductivity of about 32.3 W/(mK) were tested as reference. The pin-finned brake discs 100 contain four rows of pin-fins 102 sandwiched between two rubbing discs. The two central rows of pin-fins have a circular cross-section whilst the innermost and outermost rows of pin-fins have a blunt end as shown in Figure 7. In total, 120 pin-fins are arranged with 30 pin-fins in each row. The pin-fins occupy approximately 30% of the total volume of the ventilated channel, having a porosity level of about 0.7. Surface area density of the pin-fin arrays was calculated to be about 81 $m^2/m^3$. For stationary testing, the inboard rubbing disc was removed for endwall heat transfer measurement. Detailed dimensions of the pin-finned brake discs used during testing are summarized in Table 2 below.

Table 2: Detailed dimensions of the pin-finned brake disc (all in millimeter)

| Parameter | Value | Parameter | Value |
|---|---|---|---|
| $d_p$ | 12.5 | $R_i$ | 93.0 |
| $H_{h1}$ | 56.5 | $R_o$ | 168.0 |
| $H_{h2}$ | 68.5 | $R_{p1}$ | 96.0 |
| $H_p$ | 12.0 | $R_{p2}$ | 121.5 |
| $L_p$ | 13.5/16.0 | $R_{p3}$ | 139.0 |
| $r_{p1}$ | 5.0/6.0 | $R_{p4}$ | 163.5 |
| $r_{p2}$ | 3.0/3.0 | $t_r$ | 11.0 |
| $R_{h1}$ | 73.0 | $W_p$ | 10.0/12.0 |
| $R_{h2}$ | 82.0 | | |

Two separate WBD brake discs 10 were fabricated. The annular WBD structure was first fabricated using cold-rolled mild steel wires (SAE1006B) with the diameter of $d_{WBD}$ = 1.5 mm. The one WBD structure was brazed on to two mild steel rubbing discs for use in rotational testing whilst the second structure was brazed onto one mild steel rubbing disc for use in stationary testing. The mild steel (SAE1006) used for the rubbing discs has a thermal conductivity of about 64.9W/(mK). The unit cell of the WBD structure is composed of two types of ligaments: ligament I with a length of 9.5 mm (= $0.5l_h$) and ligament II with a length of 19 mm (= $l_h$). The overall dimensions of the unit cell were measured as: $L_{WBD}$ = 13.0 mm, $W_{WBD}$ = 13.0 mm and $H_{WBD}$ = 14.0 mm. Consequently, the porosity level and surface area density of the present WBD structure were respectively calculated to be about 0.9 and about 300 $m^2/m^3$ using the following formula:

$$\varepsilon = 1 - \frac{2\pi d_{WBD}^2 l_h}{L_{WBD} W_{WBD} H_{WBD}} \tag{1}$$

$$\rho_{SA} = \frac{8\pi d_{WBD} l_h}{L_{WBD} W_{WBD} H_{WBD}} \qquad (2)$$

where $\varepsilon$ and $\rho_{SA}$ are the porosity and the surface area density of the WBD structure, respectively. The equivalent yield strength, maximum strength, and Young's modulus of the WBD structure were measured to be 3.2 MPa, 4.8 MPa and 1.08 GPa, respectively. Other dimensions of the WBD brake discs are identical to those of the pin-finned brake discs.

**Tests**

Three different types of test were conducted. The first test was a stationary test to characterise pressure drop and local endwall heat transfer. The second test was a rotational test to investigate transient and steady-state cooling performance, while the third test was a rotational test to investigate steady-state thermo-fluidic characteristics and cooling flow rate.

**DISCUSSION OF RESULTS**

**Inlet flow pattern**

As a brake disc rotates, cooling flow is drawn and enters the ventilated channel formed between two rubbing discs. To understand the flow pattern at the inlet of the brake disc, the inlet flow pattern is visualized by neutrally buoyant helium bubbles and result is shown in Figure 8. The helium bubbles were released from a generator placed on the rotation axis upstream the ventilated brake disc.

The rotation of the brake disc creates centrifugal forces in the ventilated channel, which initiate fluid flow outward, lowering static pressure at the inlet of the ventilated channel. Consequently, the suction of ambient air into the channel (as shown by the path lines A and B in Figure 8) occurs. The centrifugal force continuously drives the air out of the ventilated channel. In a similar way, ambient air near the outer surface of the rubbing disc is also driven radially outward by the centrifugal force (as indicated by path line C). Both the flow inside the ventilated channel and the flow over the outer surface of the rubbing disc contribute to the cooling of the brake disc.

**Transient and steady-state cooling performance**

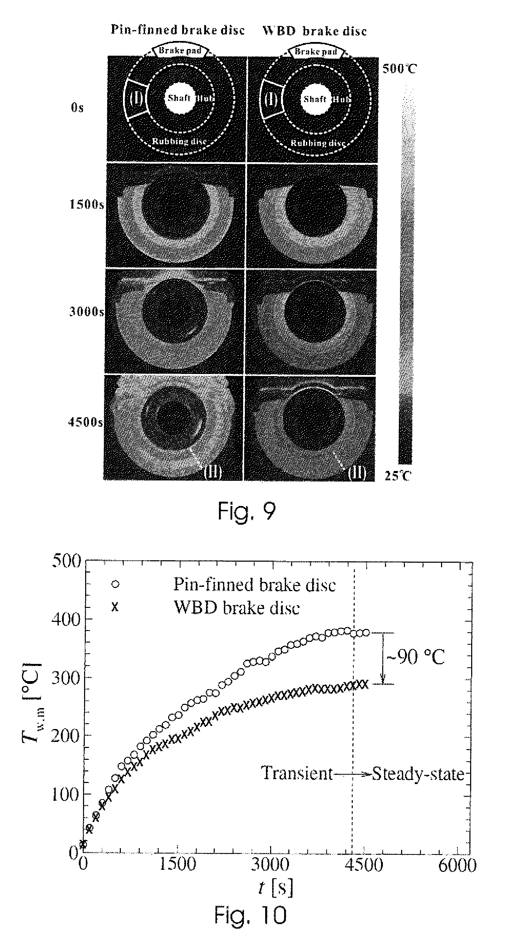

To characterize the cooling performance of the brake discs, braking tests simulating 2% gradient continuous downhill braking at a vehicle speed of 40 km/h (i.e., 200 rpm) were conducted. Simulated braking power was 1.9 kW which corresponds to typical wheel load (900 kg) of an empty medium sized truck. Figure 9 qualitatively compares the surface temperature distributions of the pin-finned and WBD brake discs at selected temporal intervals captured by a pre-calibrated IR camera for each brake disc. The smooth circumferential distribution of the surface temperature on the rubbing (outboard) discs indicates a good contact between the brake pad and discs. Overall, the surface temperature of the WBD brake disc is lower than that of the pin-finned disc, which indicates that a better cooling in the ventilated channel is provided by the WBD structure. To quantify how the surface temperature on the rubbing disc varies with time, area-averaged (region (I) indicated in Figure 9 surface temperatures from a series of IR thermal images including those in Figure 9 were extracted and results are plotted in Figure 10. As the braking is commenced, the surface temperature of both brake discs is steeply increased but its rate is gradually decreased, finally reaching a steady-state value after $t$ = 4300s. It should be noted that the ductile cast iron (for the pin-finned brake disc) has similar density and specific heat to mild steel (for the WBD brake disc). In steady-state regime e.g., $t > 4300$s, the WBD brake disc exhibits substantially lower surface temperature, about 24.0% lower, than the pin-finned brake disc.

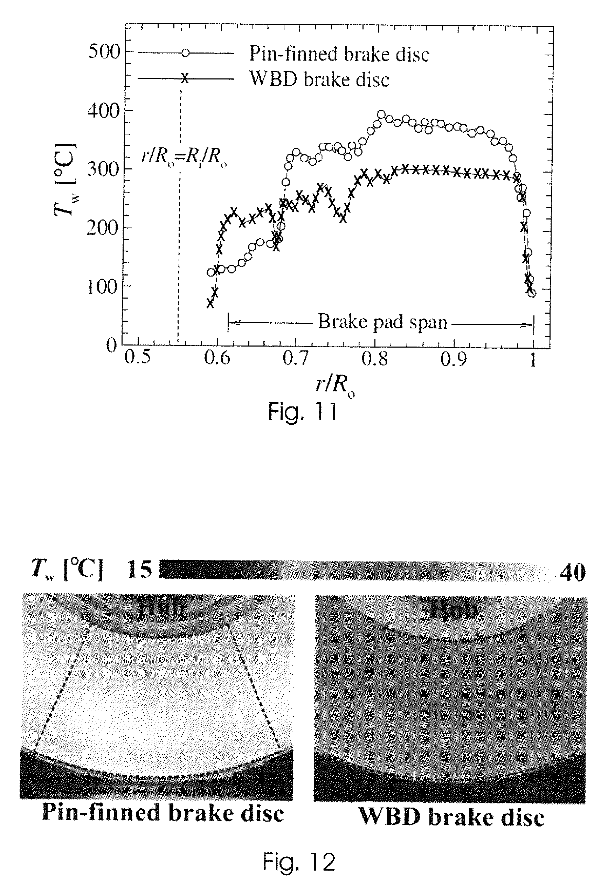

Radial variation of the surface temperature on both brake discs is considered next. Figure 11 presents radial surface temperature profiles extracted from the dashed lines in Figure 9 denoted as (II). For both brake discs, the surface temperature firstly increases, peaks roughly at $r/R_o$ = 0.8 and then decreases with increasing $r/R_o$. This indicates a better cooling close to the brake hub, which is attributable to the fact that heat generated due to the frictional heating is conducted to the solid hub which acts as an additional extended surface. The slightly decreased surface temperature near the outmost rubbing disc is due to a higher local heat transfer coefficient on the rubbing surface induced by a higher shear stress from stronger centrifugal force at larger radius. At $r/R_o > 0.68$, the WBD brake disc has a much lower surface temperature. For example, the surface temperature is about 90ºC lower at $r/R_o$ = 0.8.

**Steady-state heat transfer characteristics**

The overall cooling behaviour of both a commercial ventilated brake disc having a pin-fin structure and a brake disc having a porous WBD structure has been compared, simulating 2% gradient continuous downhill braking at a vehicle speed of 40 km/h (i.e., 200 rpm) and a braking power of 1.9 kW. It is of practical importance that how such cooling performance is influenced by operating conditions such as a vehicle speed (or the rotating speed of brake discs). To this end, steady-state overall heat transfer in a wide range of a rotational speed from 100 rpm to 1000 rpm was characterised.

Figure 12 presents representative disc surface temperature distribution on both brake discs, captured by the IR camera at 1000 rpm. Result demonstrates that the WBD brake disc has a significantly lower surface temperature than the pin-finned brake disc under steady-state condition, which is consistent with the braking test results. Convective heat transfer (in Nusselt number) was calculated based on the averaged surface temperature over an area indicated in Figure 12. For the rotational speed ranging from 100 rpm to 1000rpm, the Nusselt number has been correlated as a function of rotational Reynolds number as:

$$Nu_{Ro} = C\,\mathrm{Re}_{Ro}^{n} \qquad (3)$$

where $C = 0.8609$ and $n = 0.5836$ for the pin-finned brake disc; $C = 0.5776$ and $n = 0.6431$ for the WBD brake disc. The Nusselt number for both brake discs increases monotonically with the rotational Reynolds number. The WBD brake disc outperforms the pin-finned brake disc, providing about 16% (at 100 rpm) to about 36% (at 1000 rpm) more heat removal. At 200 rpm, the WBD structure is shown to remove about 27% more heat than that achievable by the pin-fins, which agrees well with the observed 24% reduction of the rubbing disc temperature in Figure 10.

The WBD structure has much larger surface area density (about 300 $m^2/m^3$) than the pin-fin arrays ( about 81 $m^2/m^3$), which, in part, contributes to the observed substantial enhancement of overall heat transfer in the WBD brakes disc.

**Thermal uniformity**

Minimizing a thermal gradient or maximizing thermal uniformity on brake disc surfaces has been one of important design parameters. Detailed local temperature distribution on the inner endwall surface of the ventilated channel which was stationary was mapped using the IR camera.

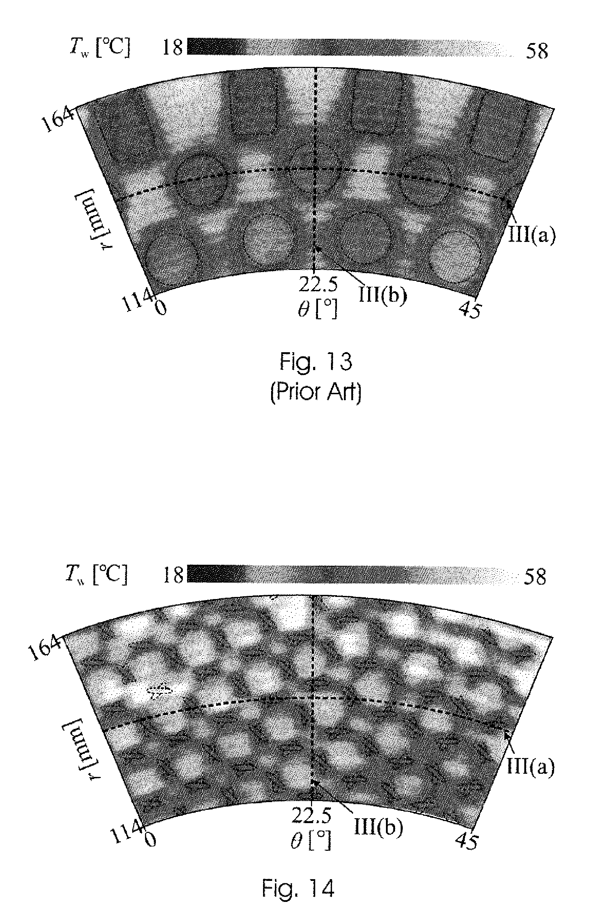

Figure 13 shows a local temperature map of the ventilated channel with the pin-fin structure. Highly non-uniform temperature distribution is evident. Local endwall temperature on and in the vicinity of each pin-fin is lower than other regions due to conduction to the pin-fins. On the other hand, the vertex of the WBD structure is much smaller and is spread widely whereas on and in the vicinity of each vertex the local endwall temperature is lower than other region similar to the pin-finned disc (Figure 14). Therefore, more uniform thermal distribution in the radial and circumferential directions is provided by the WBD structure.

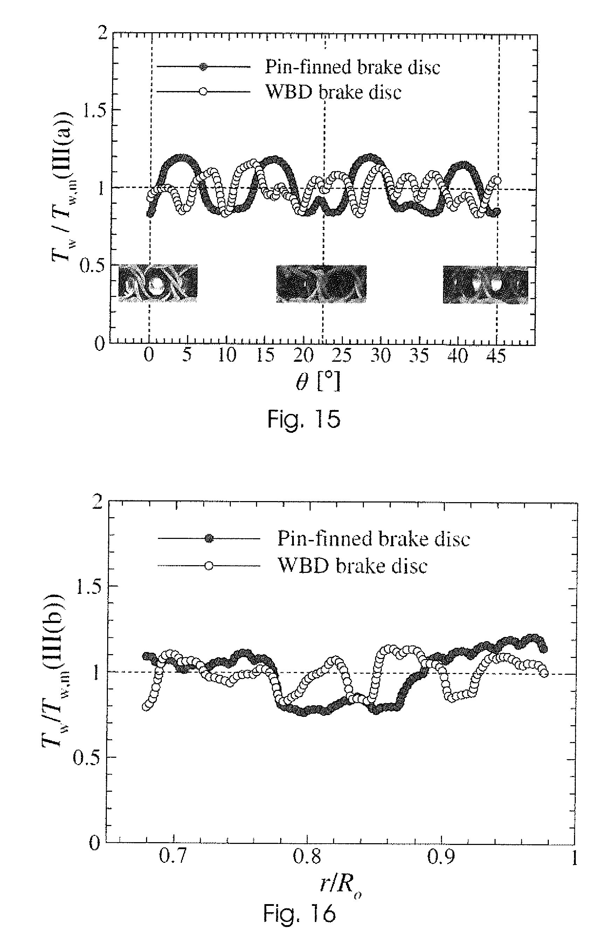

Figures 15 and 16 quantitatively show more uniform temperature distribution achievable with the WBD structure than that with the pin-fin structure where the local temperature data was extracted from Figures 13 and 14 along III(a) for the azimuthal profile and along III(b) for the radial profile. Azimuthally (Figure 15), less fluctuation of local endwall temperature in terms of magnitude and frequency is presented by the WBD structure. It is interesting to notice that the endwall temperature difference between regions where the WBD structure configures the most open (i.e., $\theta = 0º$) and most closed (i.e., $\theta = 22.5º$) flow paths, is insignificant. Radially (Figure 16), there is a slight increasing tendency of local temperature towards the outer surface of the pin-finned disc (due to smaller local Reynolds numbers as the cooling flow is decelerated) whereas a more uniform-like radial distribution is obtainable from the WBD disc.

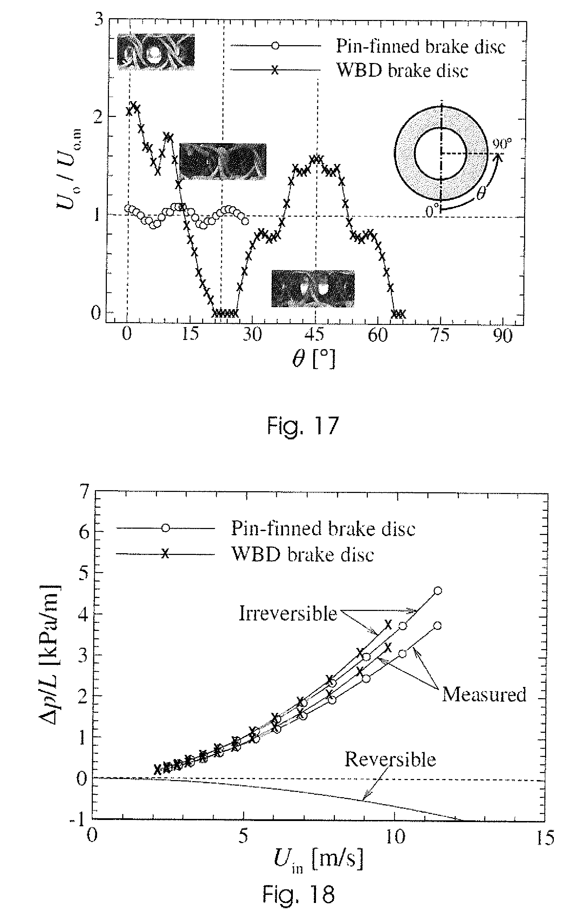

Based on the morphology of the WBD structure, highly aerodynamic anisotropy is expected. Figure 17 shows the velocity profile measured at the outlet of the WBD disc covering the azimuth angle from $\theta = 0º$ to $45º$ where the radial velocity ($U_o$) is normalized by the mean outlet velocity $U_{out}$. The outlet velocity is highly non-uniform, indicating the significant aerodynamic anisotropy. Cooling flow entering the ventilated channel may be uniform but is redistributed according to flow resistance (or blockage) posed by the morphology of a medium inside the channel. With the WBD structure, the least flow blockage encountered by the cooling flow is at $\theta = 0°$, which provides a preferred flow path whereas the highest blockage exists at $\theta = 22.5°$, decreasing cooling flow rate in this flow path. It should be noted that the aerodynamic anisotropy of the pin-fins is negligible compared to the WBD brake disc (Figure 17). Although such strong aerodynamic anisotropy exists, the endwall heat transfer distribution on the WBD disc is highly uniform. It is thought that cooling flow that convects along the more open flow path has higher momentum. This indicates the increased local Reynolds number, leading to the more heat removal. On the other hand, cooling flow which has least momentum convecting along the more closed flow path experiences the high level of flow mixing promoted by the WBD ligaments, which removes heat. The combination of these two different mechanisms provides the observed uniform-like endwall heat transfer (or temperature) distributions. Such thermo-fluidic characteristics are expected to be applicable under the rotating environment due to the strong dependence of the convective flow and heat transfer on the morphology of the WBD structure. Furthermore, the endwall thermal distributions in Figures 13 to 16 also imply that smaller local temperature gradient on the WBD disc surface minimizes thermal stress.

## HEAT TRANSFER ENHANCEMENT BY THE WBD STRUCTURE

### Pressure drop and suction capability

In ventilated brake discs, cooling flow which removes heat from heat dissipation elements in forced convection is drawn by centrifugal force when the brake disc rotates. To draw more cooling flow into the ventilated channel, low pressure drop across the core structure is desirable. Pressure drop across the stationary pin-finned and WBD brake discs has been measured at a wide range of mass flow rates. Figure 18 shows pressure drop across each structure varying with cooling flow velocity at the inlet of the ventilated channel. A monotonic increase in the pressure drop with the cooling flow velocity and a higher pressure drop from the WBD structure than the pin-fin structure in the entire velocity range considered. Since the ventilated channel is divergent along the $r$-axis, there is a pressure recovery opposite to the irreversible pressure loss. Consequently, the measured pressure drop contains both reversible and irreversible pressure components.

To obtain the true pressure loss through the structure, reversible pressure recovery is estimated as:

$$\Delta p_r = \frac{\rho U_{in}^2}{2}\left[\left(\frac{R_i}{R_{in}}\right)^2 - \left(\frac{R_i}{R_{out}}\right)^2\right] \qquad (4)$$

where $R_{in}$ and $R_{out}$ are the radial locations of two pressure tappings at the inlet and outlet of the ventilated channel, respectively. It should be pointed out that for both brake discs, the pressure recovery contributes to the measured pressure drop as a systematic deviation from the measured pressure drop if the same volume in the channel occupied by the inserted core structure is assumed. Both brake discs have difference porosities i.e., the pin-fins occupy approximately 20% more volume in the ventilated channel but for simplicity its difference is ignored. The reversible pressure recovery constitutes about 20% of the measured pressure drop, acting favourably to decrease the pressure loss.

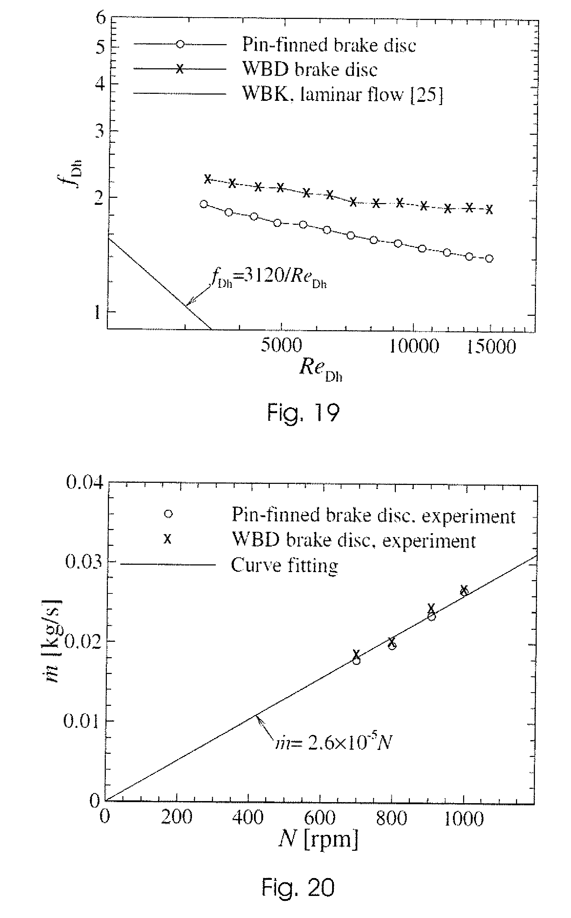

The measured pressure data is re-plotted in the non-dimensional form, the friction factor in Figure 19. The friction factor for laminar flow through a wire-woven bulk Kagome (WBK) structure which has a similar topology and porosity than a WBD structure is included for comparison. Based on the Reynolds number ranges and the distinguishable slope from the WBK structure, it may be seen that cooling flow through the WBD brake disc is within turbulent flow regime. Thus, form drag dominates the pressure loss.

In the whole range of the Reynolds numbers considered, the pressure drop through the WBD structure is about 15% to 30% higher than that through the pin-fin structure. It should be noted that the pin-fins occupy about 30% of the total volume of the ventilated channel whereas the WBD structure takes about 10% of the total volume. In summary, for a given cooling flow rate, the WBD brake disc causes more pressure drop than the pin-finned brake disc even with approximately 20% less material occupying the flow channel. This high pressure drop results from stronger flow mixing promoted by the highly tortuous flow path configured by the WBD structure's morphology.

It can be inferred that the higher pressure drop in the WBD structure hinders the suction of cooling flow unless the WBD structure generates stronger centrifugal force for a given rotational speed of the brake disc. Figure 20 depicts the cooling flow's mass flow rate measured whilst varying the rotational speed of both brake discs. It is surprising that both brake discs draw almost the same amount of cooling flow, following the same linear correlation between the coolant mass flow rate and the rotational speed. Therefore, it can be concluded that the same resultant coolant mass flow rate for a fixed rotational speed indicates the WBD structure having about 20% less material can generate stronger centrifugal force that overcomes and subsequently balances the higher pressure drop caused by the WBD structure.

A multitude of studies have shown that the "staggered" pin-fin arrays (from a stationary point of view) arranged in the ventilated channel act as "inline" pin-fin arrays in the rotating environment due to the strong Coriolis force. Typically, the staggered array causes higher pressure drop than the inline array, about 40% higher in circular pin-fin arrays. Therefore, the centrifugal force by the WBD structure in the rotating conditions might be stronger than that observed in the stationary conditions. On the other hand, due to highly complex, three-dimensional nature of the WBD structure, the difference in pressure drop between in the stationary and rotating conditions may not be significant.

### Suppression of dead flow regions

The staggered pin-fin arrays (from a stationary point of view) in the ventilated channel act as the "inline" pin-fin arrays under the rotating conditions. Large flow separation and recirculation region exits behind every thick pin-fin. These detrimental regions are isolated from each other with less interaction. However, in the WBD brake disc, the wake region behind each thin ligament is narrow. Flow mixing promoted by the three dimensional morphology of the WBD structure may cause strong interaction between these wake regions, which serves to update the fluid in the wake region, leading to the observed enhancement of overall and local convective heat transfer in the WBD brake disc.

**Material thermal conductivity**

The mild steel used in the fabrication of the WBD brake disc has a thermal conductivity of about 64.9 W/(mK), while the ductile cast iron used in the pin-finned brake disc has a lower thermal conductivity of 32.3 W/(mK). To ensure that the observed better cooling performance by the WBD structure is not attributable from its higher thermal conductivity, three-dimensional conjugate flow and heat transfer was numerically simulated for the pin-fined brake disc by a software package ANSYS CFX 14.5, the details of which are not presented here for brevity. After thorough experimental validation, it has been found that thermal conductivity of the brake disc material (at least for the two selected values i.e., mild steel and cast iron) play no part in determining local and overall heat transfer in the ventilated brake disc with a deviation of less than 2.5% at the maximum rotational speed.

The following conclusions can be drawn from the experimental results described above:

i) A substantial reduction of rubbing disc surface temperature, about 24%, is achieved by the WBD structure during continuous downhill braking.

ii) In steady-state braking, the WBD structure provides 16%-36% higher overall cooling performance than the pin-finned brake disc, with the corresponding rotational speed ranging from 100 rpm to 1000 rpm.

iii) The three-dimensionally configured thin ligaments of the WBD structure lead to azimuthally and radially more uniform heat transfer.

iv) Although the highly porous WBD structure causes higher pressure drop than the pin-fin structure the stronger suction capability of the WBD gives rise to an equal resultant coolant flow rate for a given rotational speed of the brake disc.

v) Stronger flow mixing in conjunction with enlarged heat transfer area of the WBD structure contributes to a heat transfer enhancement.

**Claims**

1. A mechanical friction device (10) including a central layer (22) which is sandwiched between two outer, friction layers (18.1; 18.2), the central layer (22) having a porosity level higher than that of the two friction layers (18.1; 182.), the outer layers being in the form of discs (18.1; 18.2) which define a ventilation channel (16) between them, **characterised in that** the central layer (22) is in the form of an annular core made from a wire-frame structure (30; 40) located in the ventilation channel (16) to act as heat transfer means to transfer heat away from the friction surfaces (20.1; 20.2) of the outer, friction layers (18.1; 18.2).

2. A mechanical friction device (20) according to claim 1, **characterised in that** the wire-frame structure is an X-type lattice sandwich structure (30) or a wire-woven bulk diamond structure (40).

3. A mechanical friction device (10) according to either claim 1 or 2, **characterised in that** the central layer (22) has a porosity level of at least 40%.

4. A mechanical friction device (10) according to claim 3, **characterised in that** the central layer (22) has a porosity level of about 90%.

5. A mechanical friction device (10) according to any one of claims 1 to 4, **characterised in that** the central layer (22) is made from steel.

6. A mechanical friction device (10) according to any one of claims 1 to 5, **characterised in that** the two outer, friction layers (18.1; 18.2) are made from steel or cast iron.

7. A mechanical friction device (10) according to any one of claims 1 to 6, **characterised in that** the friction device (10) is a disc brake or a clutch disc.

8. Use of an annular wire-frame core (30; 40) as heat dissipation means located in a ventilation channel (16) between two outer, friction layers (18.1; 18.2) of a mechanical friction device (10) so as to transfer heat away from the friction surfaces (20.1; 20.2) of the outer, friction layers (18.1; 18.2).

9. Use according to claim 8, **characterised in that** the wire-frame core is an X-type lattice sandwich structure (30) or a wire-woven bulk diamond structure (40).

10. Use according to either claim 8 or 9, **characterised in that** the wire-frame core (30; 40) is sandwiched between two outer, friction layers (18.1; 18.2) which have porosity levels lower than that of the wire frame core (30; 40).

11. Use according to any one of claims 8 to 10, **characterised in that** the friction device (10) is a brake or clutch disc.

**Patentansprüche**

1. Mechanische Reibungsvorrichtung (10) mit einer zentralen Schicht (22), die zwischen zwei äußeren Reibungsschichten (18.1; 18.2) eingelegt ist, wobei die zentrale Schicht (22) ein höheres Porositätsniveau hat als die zwei Reibungsschichten (18.1; 18.2), wobei die äußeren Schichten die Form von Scheiben (18.1; 18.2) aufweisen, die einen Ventilationskanal (16) zwischen ihnen definieren, **dadurch gekennzeichnet, dass** die zentrale Schicht (22) in Form eines ringförmigen Kerns, hergestellt aus einer Drahtgestellstruktur (30; 40), angeordnet in dem Ventilationskanal (16), ausgebildet ist, um als Wärmeübertragungsmittel zu dienen, um Wärme von den Reibungsflächen (20.1; 20.2) der äußeren Reibungsschichten (18.1; 18.2) wegzuleiten.

2. Mechanische Reibungsvorrichtung (20) nach Anspruch 1, **dadurch gekennzeichnet, dass** die Drahtgestellstruktur eine Gittersandwichstruktur vom Typ X (30) oder eine Drahtgewebe-Bulk-Diamantstruktur (40) ist.

3. Mechanische Reibungsvorrichtung (10) nach Anspruch 1 oder 2, **dadurch gekennzeichnet, dass** die zentrale Schicht (22) ein Porositätsniveau von mindestens 40 % hat.

4. Mechanische Reibungsvorrichtung (10) nach Anspruch 3, **dadurch gekennzeichnet, dass** die zentrale Schicht (22) ein Porositätsniveau von ungefähr 90 % hat.

5. Mechanische Reibungsvorrichtung (10) nach einem der Ansprüche 1 bis 4, **dadurch gekennzeichnet, dass** die zentrale Schicht (22) aus Stahl hergestellt ist.

6. Mechanische Reibungsvorrichtung (10) nach einem der Ansprüche 1 bis 5, **dadurch gekennzeichnet, dass** die zwei äußeren Reibungsschichten (18.1; 18.2) aus Stahl oder Gusseisen hergestellt sind.

7. Mechanische Reibungsvorrichtung (10) nach einem der Ansprüche 1 bis 6, **dadurch gekennzeichnet, dass** die Reibungsvorrichtung (10) eine Bremsscheibe oder eine Kupplungsscheibe ist.

8. Verwendung eines ringförmigen Drahtgestellkerns (30; 40) als Wärmedissipationsmittel, angeordnet in einem Ventilationskanal (16) zwischen zwei äußeren Reibungsschichten (18.1; 18.2) einer mechanischen Reibungsvorrichtung (10), um Wärme von den Reibungsflächen (20.1; 20.2) der äußeren Reibungsschichten (18.1; 18.2) wegzuleiten.

9. Verwendung nach Anspruch 8, **dadurch gekennzeichnet, dass** der Drahtgestellkern eine Gittersandwichstruktur vom Typ X (30) oder eine Drahtgeflecht-Bulk-Diamantstruktur (40) ist.

10. Verwendung nach Anspruch 8 oder 9, **dadurch gekennzeichnet dass** der Drahtgestellkern (30; 40) zwischen zwei äußeren Reibungsschichten (18.1; 18.2) angeordnet ist, die Porositätsniveaus unter dem des Drahtgestellkerns (30; 40) haben.

11. Verwendung nach einem der Ansprüche 8 bis 10, **dadurch gekennzeichnet, dass** die Reibungsvorrichtung (10) eine Brems- oder Kupplungsscheibe ist.

## Revendications

1. Dispositif de friction mécanique (10) comprenant une couche centrale (22) qui est prise entre deux couches de friction, ou couches extérieures (18.1 ; 18.2), la couche centrale (22) ayant un niveau de porosité supérieur à celui des deux couches de friction(18.1 ; 18.2), les couches extérieures se présentant sous la forme de disques (18.1 ; 18.2) qui définissent un canal de ventilation (16) entre elles,
**caractérisé en ce que** la couche centrale (22) se présente sous la forme d'une âme annulaire faite à partir d'une structure en fil de fer (30 ; 40) située dans le canal de ventilation (16) pour agir comme moyen de transfert de chaleur pour évacuer la chaleur des surfaces de friction (20.1 ; 20.2) des couches de friction, ou couches extérieures (18.1 ; 18.2).

2. Dispositif de friction mécanique (20) selon la revendication 1, **caractérisé en ce que** la structure en fil de fer est une structure en sandwich en treillis du type X (30) ou une structure en diamant en vrac tissée en fil de fer (40).

3. Dispositif de friction mécanique (10) selon la revendication 1 ou 2, **caractérisé en ce que** la couche centrale (22) a un niveau de porosité d'au moins 40 %.

4. Dispositif de friction mécanique (10) selon la revendication 3, **caractérisé en ce que** la couche centrale (22) a un niveau de porosité égal à environ 90 %.

5. Dispositif de friction mécanique (10) selon l'une quelconque des revendications 1 à 4, **caractérisé en ce que** la couche centrale (22) est en acier.

6. Dispositif de friction mécanique (10) selon l'une quelconque des revendications 1 à 5, **caractérisé en ce que** les deux couches de friction, ou couches extérieures (18.1 ; 18.2), sont en acier ou en fonte.

7. Dispositif de friction mécanique (10) selon l'une quelconque des revendications 1 à 6, **caractérisé en ce que** le dispositif de friction (10) est un frein à disque ou un disque d'embrayage.

8. Utilisation d'une âme annulaire à structure en fil de fer (30 ; 40) comme moyen de dissipation de chaleur situé dans un canal de ventilation (16) entre deux couches de friction, ou couches extérieures (18.1 ; 18.2), d'un dispositif de friction mécanique (10) pour évacuer la chaleur des surfaces de friction (20.1 ; 20.2) des couches de friction, ou couches extérieures (18.1 ; 18.2).

9. Utilisation selon la revendication 8, **caractérisée en ce que** la structure en fil de fer est une structure en sandwich en treillis du type X (30) ou une structure en diamant en vrac tissée en fil de fer (40).

10. Utilisation selon la revendication 8 ou 9, **caractérisée en ce que** l'âme à structure en fil de fer (30 ; 40) est prise entre deux couches de friction, ou couches extérieures (18.1 ; 18.2) qui ont un niveau de porosité inférieur à celui de l'âme à structure en fil de fer (30 ; 40).

11. Utilisation selon l'une quelconque des revendications 8 à 10, **caractérisée en ce que** le dispositif de friction (10) est un disque de frein ou d'embrayage.

Fig. 1

Fig. 2

Fig. 3

Fig. 4

Fig. 5

Fig. 6

Fig. 7

Fig. 8

Fig. 9

Fig. 10

Fig. 11

Pin-finned brake disc    WBD brake disc

Fig. 12

$T_w$ [°C]   18 ▬▬▬▬▬▬▬▬▬▬▬▬▬▬ 58

164

$r$ [mm]

III(a)

22.5   III(b)
114  0        $\theta$ [°]        45

Fig. 13
(Prior Art)

$T_w$ [°C]   18 ▬▬▬▬▬▬▬▬▬▬▬▬▬▬ 58

164

$r$ [mm]

III(a)

22.5   III(b)
114  0        $\theta$ [°]        45

Fig. 14

Fig. 15

Fig. 16

Fig. 17

Fig. 18

Fig. 19

Fig. 20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2410195 A
- DE 19819425
- FR 2972776
- DE 102008011842